# EUROPÄISCHE PATENTSCHRIFT

(11) **EP 2 354 182 B1**
(45) Veröffentlichungstag und Bekanntmachung des Hinweises auf die Patenterteilung: **05.10.2016**
(21) Anmeldenummer: 10008585.1
(22) Anmeldetag: 17.08.2010
(51) Int. Cl.: C08K 5/00, C08L 69/00, C08K 5/03, C08K 5/47, C09K 21/06, C09K 21/08

(54) **Erzeugnisse mit verbesserter Flammwidrigkeit**
Products with improved flame resistance
Produits dotés d'une résistance aux flammes améliorée

(30) Priorität: 28.08.2009 DE 102009039121
(43) Veröffentlichungstag der Anmeldung: 10.08.2011
(73) Patentinhaber: Covestro Deutschland AG, 51373 Leverkusen (DE)
(72) Erfinder: Krauter, Berit, Dr., 41464 Neuss (DE); Franssen, Hans, 47809 Krefeld (DE); Wollborn, Ute, Dr., 47877 Willich (DE); Wagner, Michael, Dr., 47443 Moers (DE)
(74) Vertreter: Levpat

(56) Entgegenhaltungen:
- WO-A1-02/083777
- WO-A1-2008/125203
- US-A- 4 486 560
- US-A1- 2009 043 023

## Beschreibung

Die vorliegende Erfindung betrifft Zusammensetzungen enthaltend Polycarbonat und 0,001 Gew.% bis 1,000 Gew.-% eines oder mehrere Flammschutzadditive ausgewählt aus der Gruppe, die aus Natrium- oder Kalium-nona-fluor-1-butansulfonat, Natrium- oder Kalium-Diphenyl-Sulfonsäure-sulfonat und deren Mischungen besteht, und zusätzlich eines oder mehrere Flammschutzadditive aus der Klasse der bromhaltigen Flammschutzadditve, sodass der Bromgehalt in der Gesamtzusammensetzung 100 ppm-1000 ppm Brom beträgt, wobei die Zusammensetzungen keinen UV-Stabilisator enthalten.

Durch die hervorragenden Eigenschaften von Kunststoffen wie z.B. geringe Dichte, Transparenz und Zähigkeit gepaart mit thermoplastischer Verformbarkeit, die eine hohe Designfreiheit gewährleistet, drängen Kunststoffe vermehrt den Werkstoff Metall aus verschiedenen Anwendungen. Überall dort wo die Gewichtsreduktion immer mehr in Vordergrund rückt vor allem im Flugzeugbau wo leichte Materialien bevorzugt werden, aber auch im Schienenverkehr oder Automobilbau werden vermehrt Kunststoffe eingesetzt. Darüber hinaus kommen Kunststoffe aber auch in IT-, Elektrotechnik- und Elektronikbereich zum Einsatz, wo sie als z.B. als Träger spannungsführender Teile oder zur Herstellung von Fernseh- und Monitorgehäusen verwendet werden.

Während Kunststoffe für diese Anwendungen gute mechanische und elektrische Eigenschaften aufweisen, sind diese aber, z.B. im Gegensatz zu Metallen, nicht inhärent flammfest, sodass Flammschutzmittel zugesetzt werden müssen. Hierbei ist zu berücksichtigen,dass der Zusatz dieser Flammschutzmittel die positiven mechanischen, optischen und elektrischen Eigenschaften der verwendeten Kunststoffe nicht negativ beeinflussen darf.

Kombinationen aus Tetrabrombisphenol A-Oligocarbonat, Alkali- oder Erdalkalisalzen von Perflouralkansulfonsäuren und Bisphenol A-Polycarbonat werden in US 2009/0043023 beschrieben. Das bromhaltige Flammschutzadditiv wird in hohen Konzentrationen, über 5 Gew.-% eingesetzt.

Die WO 2008/125203 Al beschreibt UV geschützte Polycarbonatformmassen, die halogenhaltige Flammschutzmittel in Konzentrationen enthalten die einen Bromgehalt von > 1000 ppm Brom in der Gesamtzusammensetzung bedingen.

In US 4486560 werden Zusammensetzungen beschrieben, die zwischen 0,08 und 0,8 Gew.-% Tri-(2,4,6- tribromphenoxy)triazin in Kombination mit N-(p-tolylsulfonyl)-p-toluolsulfonamid enthalten. Die Kombination mit weiteren Kaliumsulfonsalzen wird nicht beschrieben.

JP 11035814 beschreibt Zusammensetzungen enthaltend Polycarbonat und optional thermoplastische Polyester, 0,2 bis 20 Gew.-% organische halogenhaltige Compounds und fluorierte polyolefine. Die Zusammensetzungen enthalten jedoch keine Flammschutzadditive aus der Klasse der Klasse der Alkali- bzw. Erdalkalisalze von aliphatischen bzw. aromatischen Sulfonsaeure-, Sulfonamid- und Sulfonimidderivaten.

WO02/083777 beschreibt Polycarbonatzusammensetzungen, die Kaliumperfluorbutansulfonat oder Kaliumdiphenylsulfonat enthalten. Das Bromgehalt ist höher als 1000 ppm.

Trotz aller bisherigen Bemühungen besteht nach wie vor ein Bedarf an Polycarbonatzusammensetzungen mit verbesserter Flammwidrigkeit insbesondere zur Anwendung in dünnwandigen Erzeugnissen. Dies gilt in ganz besonderem Maße für transparente Zusammensetzungen bzw. für transparente Erzeugnisse, da bei Zusatz von Flammschutzmitteln in den notwendigen hohen Konzentrationen die optischen Eigenschaften der Zusammensetzungen und der daraus hergestellten Erzeugnisse oft negativ beeinflußt werden, wie z.B. durch eine schlechtere Transparenz oder Verfärbung des Materials.

Darüber hinaus besteht ebenfalls ein Bedarf an Polycarbonatzusammensetzungen mit einem effektiven Flammschutz, die eine gute Viskosität, d.h. Schmelzfließfähigkeit aufweisen, da ein steigender Gehalt an Flammschutzmittel in der Regel die Fließfähigkeit der Zusammensetzungen negativ beeinflusst.

In diesem Zusammenhang war es daher eine Aufgabe der vorliegenden Erfindung, leichtfließende, transparente Zusammensetzungen bereitzustellen, welche eine gute Flammwidrigkeit bei Wandstärken der Produkte von kleiner oder gleich 3 mm aufweisen und nur eine geringe Menge an bromhaltigen Additiven erhalten.

Ferner ist es Aufgabe der vorliegenden Erfindung, transparente Zusammensetzungen mit Polycarbonat bereitzustellen, welche bei geringem Bromgehalt eine gute Flammschutzwirkung und eine hohe Fließfähigkeit aufweisen, ohne dass die Flammschutzmittel die optischen Eigenschaften der aus den Zusammensetzungen hergestellten Produkte nachteilig beeinflussen.

Die vorliegende Erfindung betrifft daher Zusammensetzungen enthaltend Polycarbonat, 0,001 Gew.-% bis 1,000 Gew.-% eines oder mehrerer Flammschutzadditive ausgewählt aus der Gruppe, die aus Natrium- oder Kalium-nona-fluor-1-butansulfonat, Natrium- oder Kalium-Diphenyl-Sulfonsäure-sulfonat und deren Mischungen besteht, und 0,001 Gew.-% bis 1,000 Gew.-% ein oder mehrere bromhaltige Flammschutzadditive, wobei der Bromgehalt in der Gesamtzusammensetzung 100 ppm - 1000 ppm ist, wobei die Zusammensetzungen keinen UV-Stabilisator enthalten.

Vorzugsweise enthalten die Zusammensetzungen dabei außen den bromhaltigen Flammschutzadditiven keine weiteren bromhaltigen Komponenten und/oder Additive.

Die Zusammensetzungen enthalten keinen UV-Stabilisator, dessen Verwendung für Polymerzusammensetzungen aus WO 2008/125203 A1 bekannt ist. Weiter bevorzugt sind die Zusammensetzungen transparent und weisen einen Yellowness Index (zur Messung s.S. 16) unter 2,5 und eine Transmission (zur Messung s. S. 16) über 83,00 % auf.

Unter Flammschutzadditiven im Sinne der vorliegenden Erfindung sind nicht nur einzelne Flammschutzadditive zu verstehen, sondern auch Mischungen von zwei oder mehr verschiedenen Flammschutzadditiven.

Die Zusammensetzungen der vorliegenden Erfindung lassen sich in diversen Anwendungen vorteilhaft einsetzen. Hierzu zählen beispielsweise Anwendungen und Formteile im Elektro-/Elektronikbereich wie zum Beispiel Lampengehäuse, Elektroschutzschalter, Steckerleisten oder Fernseh- beziehungsweise Monitorgehäuse. Darüber hinaus können die erfindungsgemäßen Zusammensetzungen auch eingesetzt werden in Form von Platten für Architektur- oder Industrieverscheibungen oder als Verkleidungen von Schienenfahrzeug- und Flugzeuginnenräumen, an die jeweils erhöhte Anforderungen an die Flammwidrigkeit gestellt werden.

Die vorliegende Erfindung betrifft ferner auch Verfahren zur Herstellung einer erfindungsgemäßen Zusammensetzung, dadurch gekennzeichnet dass Polycarbonat und Flammschutzadditiv zusammengeführt und vermischt werden. Das Vermischen der Komponenten kann auch in Lösung, Dispersion oder Suspension erfolgen, wobei vor der Entfernung des Lösungsmittels die Mischung vorzugsweise homogenisiert wird. Das so erhaltene Polymercompound kann in einem weiteren Schritt beispielsweise granuliert und anschließend direkt zu Formteilen weiterverarbeitet werden. Schließlich ist die vorliegende Erfindung auch auf Erzeugnisse gerichtet, die eine Zusammensetzung der vorliegenden Erfindung enthalten.

Polycarbonate für die erfindungsgemäßen Zusammensetzungen sind Homopolycarbonate, Copolycarbonate und thermoplastische, vorzugsweise aromatische, Polyestercarbonate, die in der vorliegenden Anmeldung unter der Bezeichnung "Polycarbonat" subsumiert werden.

Die erfindungsgemäßen Homopolycarbonate, Copolycarbonate und Polyestercarbonate haben im allgemeinen mittlere Molekulargewichte M̅_{w} (Gewichtsmittel) von 2 000 bis 200 000, bevorzugt 3 000 bis 150 000, insbesondere 5 000 bis 100 000, ganz besonders bevorzugt 10000 bis 30 000, insbesondere 10 000 bis 28 000, und ganz besonders bevorzugt mittlere Molekulargewichte M̅_{w} von 12.000 bis 26.000 g/mol (bestimmt nach GPC (Gelpermeationschromatographie) mit Polycarbonat-Eichung).

Zur Herstellung von Polycarbonaten für die erfindungsgemäßen Zusammensetzungen sei beispielhaft auf Schnell, "Chemistry and Physics of Polycarbonats", Polymer Reviews, Vol. 9, Interscience Publishers, New York, London, Sydney 1964, auf D.C. PREVORSEK, B.T. DEBONA and Y. KESTEN, Corporate Research Center, Allied Chemical Corporation, Morristown, New Jersey 07960, "Synthesis of Poly(ester)carbonate Copolymers" in Journal of Polymer Science, Polymer Chemistry Edition, Vol. 19, 75-90 (1980), auf D. Freitag, U. Grigo, P.R. Müller, N. Nouvertne, BAYER AG, "Polycarbonates" in Encyclopedia of Polymer Science and Engineering, Vol. 11, Second Edition, 1988, Seiten 648-718 und schließlich auf Dres. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen. Die Herstellung erfolgt vorzugsweise nach dem Phasengrenzflächenverfahren oder dem Schmelze-Umesterungsverfahren und wird zunächst beispielhaft an dem Phasengrenzflächenverfahren beschrieben.

Als Ausgangsverbindungen bevorzugt einzusetzende Verbindungen sind Bisphenole der allgemeinen Formel (1)

HO-Z-OH (1)

worin Z ein divalenter organischer Rest mit 6 bis 30 Kohlenstoffatomen ist, der eine oder mehrere aromatische Gruppen enthält.
Beispiele solcher Verbindungen sind Bisphenole, die zu der Gruppe der Dihydroxydiphenyle, Bis(hydroxyphenyl)alkane, Indanbisphenole, Bis(hydroxyphenyl)ether, Bis(hydroxyphenyl)-sulfone, Bis(hydroxyphenyl)ketone und α,α'-Bis(hydroxyphenyl)-diisopropylbenzole gehören. Besonders bevorzugte Bisphenole, die zu den vorgenannten Verbindungsgruppen gehören, sind Bisphenol-A, Tetraalkylbisphenol-A, 4,4-(meta-Phenylendiisopropyl)diphenol (Bisphenol M), 4,4-(para-Phenylendiisopropyl)diphenol, N-Phenyl-Isatinbisphenol, 1,1-Bis-(4-hydroxyphenyl)-3,3,5-trimethylcyclohexan (BP-TMC), Bisphenole vom Typ der 2-Hydrocarbyl-3,3-bis(4-hydroxyaryl)phthalimidine, insbesondere 2-Phenyl-3,3-bis(4-hydroxyphenyl)phthalimidin, sowie gegebenenfalls deren Gemische.

Besonders bevorzugt sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan. Die erfindungsgemäß einzusetzenden Bisphenolverbindungen werden mit Kohlensäureverbindungen, insbesondere Phosgen oder beim Schmelzeumesterungsprozess Diphenylcarbonat bzw. Dimethylcarbonat, umgesetzt.

Polyestercarbonate werden durch Umsetzung der bereits genannten Bisphenole, mindestens einer aromatischen Dicarbonsäure und gegebenenfalls Kohlensäureäquivalente erhalten. Geeignete aromatische Dicarbonsäuren sind beispielsweise Phthalsäure, Terephthalsäure, Isophthalsäure, 3,3'-oder 4,4'-Diphenyldicarbonsäure und Benzophenondicarbonsäuren. Ein Teil, bis zu 80 Mol%, vorzugsweise von 20 bis 50 Mol-% der Carbonatgruppen in den Polycarbonaten können durch aromatische Dicarbonsäureester-Gruppen ersetzt sein.

Beim Phasengrenzflächenverfahren verwendete inerte organische Lösungsmittel sind beispielsweise Dichlormethan, die verschiedenen Dichlorethane und Chlorpropanverbindungen, Tetrachlormethan, Trichlormethan, Chlorbenzol und Chlortoluol. Vorzugsweise werden Chlorbenzol oder Dichlormethan bzw. Gemische aus Dichlormethan und Chlorbenzol eingesetzt.

Die Phasengrenzflächenreaktion kann durch Katalysatoren wie tertiäre Amine, insbesondere N-Alkylpiperidine oder Oniumsalze beschleunigt werden. Bevorzugt werden Tributylamin, Triethylamin und N-Ethylpiperidin verwendet. Im Falle des Schmelzeumesterungsprozesses werden die in DE-A 42 38 123 genannten Katalysatoren verwendet.

Die Polycarbonate können durch den Einsatz geringer Mengen Verzweiger bewusst und kontrolliert verzweigt werden. Einige geeignete Verzweiger sind: Isatinbiskresol, Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)-ethan; Tri-(4-hydroxyphenyl)-phenylmethan; 2,2-Bis-[4,4-bis-(4-hydroxyphenyl)-cyclohexyl]-propan; 2,4-Bis-(4-hydroxyphenylisopropyl)-phenol; 2,6-Bis-(2-hydroxy-5'-methyl-benzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenyl-isopropyl)-phenoxy)-methan; α,α',α"-Tris-(4-hydroxyphenyl)-1,3,5-triisopropylbenzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4"-dihydroxytriphenyl)-methyl)-benzol und insbesondere: 1,1,1-Tri-(4-hydroxyphenyl)-ethan und Bis-(3-methyl-4-hydroxyphenyl)-2-oxo-2,3-dihydroindol.

Die gegebenenfalls mitzuverwendenden 0,05 bis 2 Mol-%, bezogen auf eingesetzte Diphenole, an Verzweigern bzw. Mischungen der Verzweigern, können mit den Diphenolen zusammen eingesetzt werden aber auch in einem späteren Stadium der Synthese zugegeben werden.

Es können Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cu-mylphenol oder deren Mischungen verwendet in Mengen von 1-20 Mol-%, bevorzugt 2-10 Mol-%, je Mol Bisphenol. Bevorzugt sind Phenol, 4-tert.-Butylphenol bzw. Cumylphenol.

Kettenabbrecher und Verzweiger können getrennt oder aber auch zusammen mit dem Bisphenol den Synthesen zugesetzt werden.

Das erfindungsgemäß bevorzugte Polycarbonat ist Bisphenol-A-Homopolycarbonat.

Alternativ können die erfindungsgemäßen Polycarbonate auch nach dem Schmelzumesterungsverfahren hergestellt werden. Das Schmelzumesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie der DE-B 10 31 512 beschrieben.

Beim Schmelzumesterungsverfahren werden die bereits beim Phasengrenzflächenverfahren beschriebenen aromatischen Dihydroxyverbindungen, mit Kohlensäurediestern unter Zuhilfenahme von geeigneten Katalysatoren und gegebenenfalls weiteren Zusatzstoffen in der Schmelze umgeestert

Kohlensäurediester im Sinne der Erfindung sind solche der Formel (2) und (3) 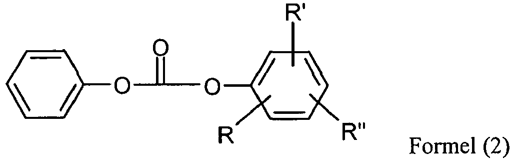 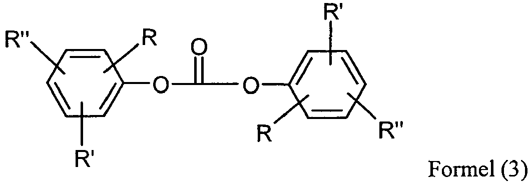 wobei
R, R' und R" unabhängig voneinander H, gegebenenfalls verzweigte C₁-C₃₄-Alkyl/Cycloalkyl, C₇-C₃₄-Alkaryl oder C₆-C₃₄-Aryl darstellen können,
   beispielsweise
Diphenylcarbonat, Butylphenyl-phenylcarbonat, Di-Butylphenylcarbonat, Isobutylphenyl-phenyl-carbonat, Di-Isobutylphenylcarbonat, tert-Butylphenyl-phenylcarbonat, Di-tert-Butylphenylcarbonat, n-Pentylphenyl-phenylcarbonat, Di-(n-Pentylphenyl)carbonat, n-Hexylphenyl-phenylcarbonat, Di-(n-Hexylphenyl)carbonat, Cyclohexylphenyl-phenylcarbonat, Di-Cyclohexylphenylcarbonat, Phenylphenol-phenylcarbonat, Di-Phenylphenolcarbonat, Isooctylphenyl-phenylcarbonat, Di-Isooctylphenylcarbonat, n-Nonylphenyl-phenylcarbonat, Di-(n-Nonylphenyl)carbonat, Cumylphenyl-phenylcarbonat, Di-Cumylphenylcarbonat, Naphthylphenyl-phenylcarbonat, Di-Naphthylphenylcarbonat, Di-tert-Butylphenyl-phenylcarbonat, Di-(Di-tert-Butylphenyl)carbonat, Dicumylphenyl-phenylcarbonat, Di-(Dicumylphenyl)carbonat, 4-Phenoxyphenyl-phenylcarbonat, Di-(4-Phenoxyphenyl)carbonat, 3-Pentadecylphenyl-phenylcarbonat, Di-(3-Pentadecylphenyl)carbonat, Tritylphenyl-phenylcarbonat, Di-Tritylphenylcarbonat,
   bevorzugt
Diphenylcarbonat, tert-Butylphenyl-phenylcarbonat, Di-tert-Butylphenylcarbonat, Di-Phenylphenolcarbonat, Cumylphenyl-phenylcarbonat, Di- Phenylphenol-phenylcarbonat, Cumylphenylcarbonat, besonders bevorzugt Diphenylcarbonat.

Es können auch Mischungen der genannten Kohlensäurediester eingesetzt werden.

Der Anteil an Kohlensäureester beträgt 100 bis 130 mol-%, bevorzugt 103 bis 120 mol-%, besonders bevorzugt 103 bis 109 mol-%, bezogen auf die Dihydroxyverbindung.

Als Katalysatoren im Sinne der Erfindung werden im Schmelzumesterungsverfahren wie in der genannten Literatur beschrieben basische Katalysatoren wie beispielsweise Alkali- und Erdalkalihydroxide und -oxide aber auch Ammonium- oder Phosphoniumsalze, im Folgenden als Oniumsalze bezeichnet, eingesetzt. Bevorzugt werden dabei Oniumsalze, besonders bevorzugt Phosphoniumsalze eingesetzt. Phosphoniumsalze im Sinne der Erfindung sind solche der Formel (4) 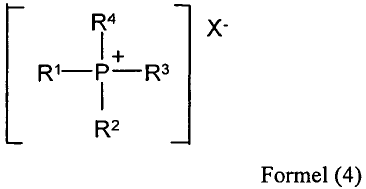 wobei
R¹⁻⁴ dieselben oder verschiedene C₁-C₁₀-Alkyle, C₆-C₁₀-Aryle, C₇-C₁₀-Aralkyle oder C₅-C₆-Cycloalkyle sein können, bevorzugt Methyl oder C₆-C₁₄-Aryle, besonders bevorzugt Methyl oder Phenyl, und
X⁻ ein Anion wie Hydroxid, Sulfat, Hydrogensulfat, Hydrogencarbonat, Carbonat, ein Halogenid, bevorzugt Chlorid, oder ein Alkoholat der Formel OR sein kann, wobei R C₆-C₁₄-Aryl oder C₇-C₁₂-Aralkyl, bevorzugt Phenyl, sein kann. Bevorzugte Katalysatoren sind Tetraphenylphosphoniumchlorid, Tetraphenylphosphoniumhydroxid, Tetraphenylphosphoniumphenolat, und besonders bevorzugt Tetraphenylphosphoniumphenolat.

Die Katalysatoren werden bevorzugt in Mengen von 10⁻⁸ bis 10⁻³ mol, bezogen auf ein Mol Bisphenol, besonders bevorzugt in Mengen von 10⁻⁷ bis 10⁻⁴ mol, eingesetzt.

Weitere Katalysatoren können allein oder gegebenenfalls zusätzlich zu dem Oniumsalz verwendet werden, um die Geschwindigkeit der Polymerisation zu erhöhen. Dazu gehören Salze von Alkalimetallen und Erdalkalimetallen, wie Hydroxide, Alkoxide und Aryloxide von Lithium, Natrium und Kalium, vorzugsweise Hydroxid-, Alkoxid- oder Aryloxidsalze von Natrium. Am meisten bevorzugt sind Natriumhydroxid- und Natriumphenolat.

Die Mengen des Cokatalysators können im Bereich von 1 bis 200 ppb, vorzugsweise 5 bis 150 ppb und am meisten bevorzugt 10 bis 125 ppb liegen, jeweils berechnet als Natrium.
Die Umesterungsreaktion der aromatischen Dihydroxyverbindung und des Kohlensäurediester in der Schmelze wird bevorzugt in zwei Stufen durchgeführt. In der ersten Stufe findet das Aufschmelzen der aromatischen Dihydroxyverbindung und des Kohlensäurediester bei Temperaturen von 80 bis 250°C, bevorzugt 100 bis 230°C, besonders bevorzugt 120 bis 190°C unter normalem Druck in 0 bis 5 Stunden, bevorzugt 0,25 bis 3 Stunden statt. Nach Zugabe des Katalysators wird durch Anlegen von Vakuum (bis zu einem Druck von 2,6 mbar in der Apparatur) und Erhöhung der Temperatur (auf bis zu 260°C) durch Abdestillieren des Monophenols das Oligocarbonat aus der aromatischen Dihydroxyverbindung und dem Kohlensäurediester hergestellt. Hierbei fällt die Hauptmenge an Brüden aus dem Prozess an. Das so hergestellte Oligocarbonat hat eine mittlere Gewichtsmolmasse Mw (ermittelt durch Messung der rel. Lösungsviskosität in Dichlormethan oder in Mischungen gleicher Gewichtsmengen Phenol/o-Dichlorbenzol geeicht durch Lichtstreuung) im Bereich von 2000 g/mol bis 18 000 g/mol bevorzugt von 4 000 g/mol bis 15 000 g/mol.

In der zweiten Stufe wird bei der Polykondensation durch weiteres Erhöhen der Temperatur auf 250 bis 320°C, bevorzugt 270 bis 295°C bei einem Druck von <2,6 mbar das Polycarbonat hergestellt, wobei der Rest an Brüden aus dem Prozess entfernt wird.
Die Katalysatoren können auch in Kombination (zwei oder mehrere) miteinander eingesetzt werden.

Beim Einsatz von Alkali-/Erdalkalimetallkatalysatoren werden die Alkali-/ Erdalkalimetallkatalysatoren bevorzugt zu einem späteren Zeitpunkt (z. B. nach der Oligocarbonatsynthese bei der Polykondensation in der zweiten Stufe) zugesetzt.

Die Reaktion der aromatischen Dihydroxyverbindung und des Kohlensäurediester zum Polycarbonat kann im Sinne des erfindungsgemäßen Verfahrens diskontinuierlich oder bevorzugt kontinuierlich durchgeführt werden, beispielsweise in Rührkesseln, Dünnschichtverdampfern, Fallfilmverdampfern, Rührkesselkaskaden, Extrudern, Knetern, einfachen Scheibenreaktoren und Hochviskosscheibenreaktoren.

Analog zum Phasengrenzflächenverfahrens können durch Einsatz mehrfunktioneller Verbindungen verzweigte Poly- oder Copolycarbonate hergestellt werden.

Den erfindungsgemäßen Polycarbonaten können noch andere aromatische Polycarbonate und/oder andere Kunststoffe wie aromatische Polyester wie Polybutylenterephthalat oder Polyethylenterephthalat, Polyamide, Polyimide, Polyesteramide, Polyacrylate und Polymethacrylate wie zum Beispiel Polyalkyl(meth)acrylate und hier insbesondere Polymethylmethacrylat, Polyacetale, Polyurethane, Polyolefine, halogenhaltige Polymere, Polysulfone, Polyethersulfone, Polyetherketone, Polysiloxane, Polybenzimidazole, Harnstoff-Formaldehyd-Harze, Melamin-Formaldehydharze, Phenol-Formaldehyd-Harze, Alkydharze, Epoxidharze, Polystyrole, Copolymere des Styrols oder des alpha-Methylstyrols mit Dienen oder Acrylderivaten, Pfropfpolymerisate auf Basis Acrylnitril/-Butadien/Styrol oder auf Acrylatkautschuk basierende Pfropfcopolymerisate (s. beispielsweise die in EP-A 640 655 beschriebenen Pfropfpolymerisate) beziehungsweise Siliconkautschuke in bekannter Weise zugemischt werden, beispielsweise durch Compoundierung.

Den erfindungsgemäßen Polycarbonaten sowie den ggf. weiteren enthaltenen Kunststoffen können noch die für diese Thermoplasten üblichen Additive wie Füllstoffe, UV-Stabilisatoren, Thermostabilisatoren, Antistatika und Pigmente in den üblichen Mengen zugesetzt werden; gegebenenfalls können das Entformungsverhalten und/oder das Fließverhalten noch durch Zusatz externer Entformungsmittel und/oder Fließmittel, verbessert werden (z. B. Alkyl- und Arylphosphite, - phosphate, -phosphane, -niedermolekulare Carbonsäureester, Halogenverbindungen, Salze, Kreide, Quarzmehl, Glas- und Kohlenstofffasern, Pigmente und deren Kombination).

Solche Verbindungen werden z. B. in WO 99/55772 A1, S. 15 - 25, EP 1 308 084 und in den entsprechenden Kapiteln des "Plastics Additives Handbook" , ed. Hans Zweifel, 5th Edition 2000, Hanser Publishers, Munich beschrieben.

Geeignete Flammschutzmittel im Sinne der vorliegenden Erfindung sind unter anderem Alkali- bzw. Erdalkalisalze von aliphatischen bzw. aromatischen Sulfonsäure- Sulfonamid- und Sulfonimidderivaten z.B. Kaliumperfluorbutansulfonat, Kaliumdiphenyl-sulfonsulfonat, N-(p-tolylsulfonyl-)-p-toluolsulfimid-Kaliumsalz, N-(N'-Benzylaminocarbonyl)-sulfanylimid-Kaliumsalz.

Hierin beschrieben sind Salze die als Flammschutzmittel verwendet werden, sowie Natrium- oder Kaliumperfluorbutansulfat, Natrium-oder Kaliumperfluormethansulfonat, Natrium- oder Kaliumperfluoroctansulfat, Natrium-oder Kalium-2,5-dichlorbenzolsulfat, Natrium- oder Kalium-2,4,5-trichlorbenzolsulfat, Natrium- oder Kalium-methylphosphonat, Natrium- oder Kalium-(2-phenyl-ethylen)-phosphonat, Natrium- oder Kaliumpentachlorbenzoat, Natrium- oder Kalium-2,4,6-trichlorbenzoat, Natrium-oder Kalium-2,4-dichlorbenzoat, Lithium-phenylphosphonat, Natrium- oder Kalium-diphenylsulfon-sulfonat, Natrium- oder Kalium-2-formylbenzolsulfonat, Natrium- oder Kalium-(N-benzolsulfonyl)-benzolsulfonamid. Trinatrium- oder Trikalium-hexafluoroaluminat, Dinatrium- oder Dikaliumhexafluorotitanat, Dinatrium- oder Dikalium-hexafluorosilikat, Dinatrium- oder Dikaliumhexafluorozirkonat, Natrium- oder Kalium-pyrophosphat, Natrium- oder Kalium-metaphosphat, Natrium- oder Kalium-tetrafluoroborat, Natrium- oder Kalium-hexafluorophosphat, Natrium- oder Kalium- oder Lithiumphosphat, N-(p-tolylsulfonyl-)-p-toluolsulfimid-Kaliumsalz, N-(N'-Benzylaminocarbonyl)-sulfanylimid-Kaliumsalz und deren Mischungen.

Das organische Flammschutzsalz ist ausgewählt aus der Gruppe, die aus Natrium- oder Kalium-nona-fluor-1-butansulfonat, Natrium- oder Kalium-Diphenyl-Sulfonsäure-sulfonat, und deren Mischungen besteht, wobei eine Mischung der Kaliumsalze besonders bevorzugt ist.

Das Verhältnis von Natrium- oder Kalium-Diphenyl-Sulfonsäure-sulfonat und Natrium- oder Kalium-nona-fluor-1-butansulfonat beträgt hierbei vorzugweise von 3:1 bis 8:1, bevorzugt von 4:1 bis 7:1, und besonders bevorzugt etwa 6:1.

Besonders bevorzugt als Flammschutzsalz sind Kalium-nona-fluor-1-butansulfonat und Natrium-oder Kalium-diphenylsulfonsulfonat. Kalium-nona-fluor-1-butansulfonat ist u.a. als Bayowet®C4 (Firma Lanxess, Leverkusen, Deutschland, CAS-Nr. 29420-49-3), RM64 (Firma Miteni, Italien) oder als 3M™ Perfluorobutanesulfonyl Fluoride FC-51 (Firma 3M, USA) kommerziell erhältlich. Kalium-diphenylsulfon-sulfonat ist kommerziell erhältlich von z.B. Sloss Industries Corp unter dem Namen KSS-FR.

Ebenfalls sind auch andere Mischungen der oben genannten Salze geeignet.

Die organischen Flammschutzsalze werden in Mengen von 0,001 Gew. % bis 1,000 Gew.-%, vorzugsweise 0,01 Gew.-% bis 0,80 Gew.-%, besonders bevorzugt 0,01 Gew.-% bis 0,60 Gew.-%, insbesondere 0,03 Gew.-% bis 0,20 Gew.%, jeweils bezogen auf die Gesamtzusammensetzung, in den Formmassen eingesetzt.

Geeignete weitere Flammschutzmittel im Sinne der vorliegenden Erfindung sind bromhaltige Verbindungen. Hierzu zählen bromierte Verbindungen wie bromierte Oligocarbonate (z.B. Tetrabrombisphenol-A-Oligocarbonat BC-52® (CAS-Nr. 94334-64-2), ein Phenoxy-abgebrochenes Carbonat-Oligomer des Tetrabrombispenol-A mit einem Bromgehalt von 52 %, einem Schmelzbereich von 180°C-210°C sowie einer spezifischen Dichte von 2,2 g/ml (bestimmt bei 25 °C); BC-58® (CAS-Nr. 71342-77-3), ein Phenoxy-abgebrochenes Carbonat-Oligomer des Tetrabrombispenol-A mit einem Bromgehalt von 58%, einem Schmelzbereich von 200°C-230 °C sowie einer spezifischen Dichte von von 2,2 g/ml (bestimmt bei 25 °C); BC-52HP® (CAS-Nr. 94334-64-2), Phenoxy-abgebrochenes Carbonat-Oligomer des Tetrabrombispenol-A der Firma Chemtura mit einem Bromgehalt von 53,9 %, einem Schmelzbereich von 210°C-240°C sowie einer spezifischen Dichte von 2,2 g/ml (bestimmt bei 25 °C), Polypentabrombenzylacrylate (z.B. FR 1025 der Firma Dead Sea Bromine (DSB)); oligomere Umsetzungsprodukte aus Tetrabrom-bisphenol-A mit Expoxiden (z.B. F 2300 der Firma Dead Sea Bromine, CAS-Nr. 68928-70-1, Bromgehalt 51%, Mittleres Molekulargewicht MW = 3600 und F 2400, CAS-Nr. 68928-70-1, Bromgehalt 52-54%, Mittleres Molekulargewicht MW = 40000 bis 60000); 2,4,6-Tribromphenol (CAS Nr. 118-79-6) mit dem Handelsnamen: FR-613, FR 20, Solaris FR 20, PH-73, PH-73FF, erhältlich bei Sinobrom, Chemtura, Manac, Shandong Laizhou, Shandong Ocean, Shouguang Ocean, Solaris ChemTech, Weifang Dacheng oder ICL-IP;oder bromierte Oligo- bzw. Polystyrole (z.B. Pyro-Chek® 68PB der Firma Ferro Corporation; PDBS 80 und Firemaster® PBS-64HW der Firma Chemtura sowie 2,4,6-Tris-(2,4,6-Tribromophenoxy)-1,3,5-Triazin (CAS: 25713-60-4) (z.B. FR245 der Firma ICL, oder PY-ROGUARD SR-245 erhältlich von Dai-Ichi Kogyo Seiyaku Co., Ltd) und 1,2-Bis(pentabromophenyl)ethane (CAS: 84852-53-9) (z.B. Firemaster 2100 der Firma Chemtura, oder Saytex 8010 der Firma Albemarle).

Ebenfalls sind Mischungen der genannten bromierten Verbindungen geeignet.

Besonders bevorzugte bromierte Verbindungen zur Flammhemmung im Rahmen dieser Erfindung sind folgende kommerziell erhältliche Produkte:
- Tetrabrombisphenol-A-Oligocarbonat BC-52HP® (CAS-Nr. 94334-64-2), Phenoxy-abgebrochenes Carbonat-Oligomer des Tetrabrombispenol-A mit einem Bromgehalt von 53,9 %, einem Schmelzbereich von 210°C-240°C sowie einer spezifischen Dichte von 2,2 g/ml (bestimmt bei 25 °C) der Firma Chemtura),
- 1,2-Bis(pentabromophenyl)ethane Saytex 8010® (CAS: 84852-53-9) mit einem Bromgehalt von 82,27 % einem Schmelzpunkt bei 350°C und einer spezifischen Dichte von 3.25 (gemessen bei 25°C) und
- 2,4,6-Tris-(2,4,6-Tribromophenoxy)-1,3,5-Triazin FR 245® (CAS: 25713-60-4) mit einem Bromgehalt von 67,37 %, einem Schmelzpunkt von 230°C, sowie einer spezifischen Dichte von 2,44 g/mL (bestimmt bei 25°C).

Besonders bevorzugt sind bromierte Oligocarbonate, insbesondere auf Basis von Tetrabrombisphenol-A-Oligocarbonat.

Der Anteil der bromhaltigen Verbindungen in den Zusammensetzungen beträgt 0,001 Gew.-% bis 1,000 Gew.-%, vorzugsweise 0,01 Gew.% bis 0,80 Gew.-%, und besonders bevorzugt 0,1 Gew.% bis 0,6 Gew.-%, wobei der Bromgehalt in der Gesamtzusammensetzung 100 ppm bis 1000 ppm, bevorzugt 200 ppm bis 950 ppm und besonders bevorzugt 300 ppm bis 900 ppm, und am meisten bevorzugt 600 ppm- 900 ppm, beträgt.

Als Antitropfmittel kann den Formmassen zusätzlich Polytetrafluorethylen (PTFE), bevorzugt als Pulver oder als Blend, zugefügt werden. Diese sind in diversen Produktqualitäten kommerziell verfügbar. Hierzu zählen Additive wie Hostaflon® TF2021 oder aber PTFE-Blends wie Metablen® A-3800 (ca. 40% PTFE CAS 9002-84-0 und ca. 60 % Methylmethacrylat/Butylacrylat Copolymer CAS 25852-37-3 von Misubishi-Rayon) oder Blendex® B449 (ca. 50% PTFE und ca. 50 % SAN [aus 80 % Styrol und 20 % Acrylnitril] der Firma Chemtura.

Im Rahmen der vorliegenden Erfindung wird PTFE in Mengen von 0,05 Gew.-% bis 5,00 Gew.-%, bevorzugt 0,1 Gew.-% bis 1,0 Gew%, besonders bevorzugt 0,1 Gew.-% bis 0,5 Gew.-%, jeweils bezogen auf die Gesamtzusammensetzung und auf den reinen PTFE-Gehalt, eingesetzt.

Eine besonders bevorzugte Ausfiihrungsform enthält organisches Flammschutzsalz und bromhaltiges Flammschutzadditiv in der Summe Gewichtsanteile bezogen auf die Gesamtzusammensetzung von weniger als 1 Gew.-% ist, wobei das organische Flammschutzsalz vorzugsweise Kalium-nonafluor-1-butansulfonat ist.

### Herstellung der Zusammensetzungen:

Die Herstellung einer Zusammensetzung enthaltend Polycarbonat und Flammschutzadditive erfolgt mit gängigen Einarbeitungsverfahren und kann beispielsweise durch Vermischen von Lösungen der Flammschutzadditive mit einer Lösung von Polycarbonat in geeigneten Lösungsmitteln wie Dichlormethan, Halogenalkanen, Halogenaromaten, Chlorbenzol und Xylolen erfolgen. Die Sub-. stanzgemische werden dann bevorzugt in bekannter Weise durch Extrusion homogenisiert. Die Lösungsgemische werden bevorzugt in bekannter Weise durch Ausdampfen des Lösungsmittels und anschließender Extrusion aufgearbeitet, beispielsweise compoundiert.

Zudem kann die Zusammensetzung in üblichen Mischvorrichtungen wie Schneckenextrudern (zum Beispiel Zweischneckenextruder, ZSK), Kneter, Brabender- oder Banbury-Mühlen gemischt und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die erfindungsgemäßen Zusammensetzungen können in dem Fachmann bekannter Weise aufgearbeitet und zu beliebigen Formkörpern verarbeitet werden, beispielsweise durch Extrusion, Spritzguss oder Extrusionsblasformen.

Bei der Herstellung von Platten gemäß der vorliegenden Erfindung wird das Polycarbonat-Granulat des Basismaterials dem Fülltrichter des Hauptextruders zugeführt, das Coextrusionsmaterial dem des Coextruders. Im jeweiligen Plastifiziersystem Zylinder/Schnecke erfolgt das Auf schmelzen und Fördern des jeweiligen Materials. Beide Materialschmelzen werden im Coexadapter zusammengeführt und bilden nach Verlassen der Düse und Abkühlen einen Verbund. Die weiteren Einrichtungen dienen dem Transport, Ablängen und Ablegen der extrudierten Platten.
Platten ohne Coextrusionsschicht werden entsprechend hergestellt, indem entweder der Coextruder nicht betrieben wird oder mit der gleichen Polymerzusammensetzung wie der Hauptextruder befüllt wird.

Das Blasformen von Polycarbonat ist unter anderem in der DE 102 29 594 und hier zitierter Literatur näher beschrieben.

### Flammschutzprüfungen

Es ist eine Vielzahl an Flammschutzprüfungen bekannt. Die Flammwidrigkeit von Kunststoffen wird im vorliegenden Fall nach der Methode UL94V (s. hierzu:
a) Underwriters Laboratories Inc. Standard of Safety, "Test for Flammability of Plastic Materials for Parts in Devices and Appliances", S 14 ff, Northbrook 1998;
b) J. Troitzsch, "International Plastics Flammability Handbook", S. 346 ff., Hanser Verlag, München 1990)
bestimmt. Bewertet werden hierbei Nachbrennzeiten und Abtropfverhalten von ASTM-Normprüfkörpern.

Für die Einstufung eines flammgeschützten Kunststoffs in die Brandklasse UL94V-0 müssen im einzelnen die folgenden Kriterien erfüllt sein: bei einem Satz von 5 ASTM Normprüflcörpern (Maße: 127 * 12,7 * X mm³, mit X = Dicke des Prüfkörpers, z.B. 3,2; 3,0; 1,5 1,0 oder 0,75 mm) dürfen alle Proben nach zweimaliger Beflammung von 10 Sekunden Dauer mit einer offenen Flamme definierter Höhe nicht länger als 10 Sekunden nachbrennen. Die Summe der Nachbrennzeiten bei 10 Beflammungen von 5 Proben darf nicht größer als 50 Sekunden sein. Zudem darf kein brennendes Abtropfen, vollständiges Abbrennen oder Nachglühen des jeweiligen Prüfkörpers von länger als 30 Sekunden erfolgen. Die Einstufung UL94V-1 verlangt, dass die Einzelnachbrennzeiten nicht länger als 30 Sekunden betragen und dass die Summe der Nachbrennzeiten von 10 Beflammungen von 5 Proben nicht größer als 250 Sekunden ist. Die Gesamtnachglühzeit darf nicht mehr als 250 Sekunden betragen. Die übrigen Kriterien sind identisch mit den oben erwähnten. Eine Einstufung in die Brandklasse UL94V-2 erfolgt dann, wenn es bei Erfüllen der übrigen Kriterien der UL94V-1 Einstufung zu einem brennenden Abtropfen kommt.

### Rheologische Eigenschaften:

Die Bestimmung des Schmelzeindex (MFR, MVR) erfolgt nach ASTM D1238 MVR.

### Optische Messungen:

Die Trübungs- und Transmissionsbestimmungen erfolgten an Platten der Geometrie 60 * 40 * 4 mm³ gemäß ISO 13468.

Der Yellowness-Index YI wird nach ASTM E313 berechnet.

### Beispiele

### Herstellung der Zusammensetzungen:

Die Zusammensetzungen gemäß der vorliegenden Erfindung werden in einer Vorrichtung umfassend: Eine Dosiereinrichtung für die Komponenten, einem gleichlaufenden Zweiwellenkneter (ZSK 25 von der Firma Werner & Pfleiderer) mit einem Schneckendurchmesser von 25 mm, einer Lochdüse zur Ausformung von Schmelzesträngen, einem Wasserbad zur Abkühlung und dem Verfestigen der Stränge und einem Granulator compoundiert.

Für die Herstellung der Zusammensetzungen der Beispiele 1 bis 12 in der oben beschriebenen Compoundiereinrichtung wurden folgende Komponenten eingesetzt:

Makrolon® 2408 ist ein kommerziell von der Firma Bayer MaterialScience AG erhältliches Polycarbonat. Makrolon® 2408 hat EU-/FDA-Qualität und enthält keinen UV-Absorber. Die Schmelze-Volumenfließrate (MVR) nach ISO 1133 beträgt 19 cm³/(10 min) bei 300 °C und 1,2 kg Belastung.

Irganox® 1076 (CAS Nummer 2082-79-3)ist ein kommerziell von der Firma Ciba AG erhältliches monofunktionelles, sterisch gehindertes Phenol und gehört zu der Gruppe der Phenolische Antioxidantien.

Irgafos® P-EPQ FF (CAS No. 119345-01-6)ist ein kommerziell von der Firma Ciba AG erhältliches Phosphinit.

Loxiol® VPG 861 ist ein kommerziell bei der Firma Cognis AG erhältliches Penta-erythrit-tetrastearat.

KSS ist ist ein kommerziell bei der Firma Sloss Industries erhältliches Kalium-diphenylsulfonsulfonat.

C4, Bayowet^{®}C4 ist ein kommerziell bei der Firma Firma Lanxess AG erhältliches Kalium-nonafluor-1-butansulfonat.

FR245 ist ein kommerziell bei der Firma ICL-IP erhältliches 2,4,6-Tris-(2,4,6-Tribromophenoxy)-1,3,5-Triazin (CAS: 25713-60-4). FR245 enthält 67,37% Brom.

S8010, Saytex® 8010 ist ein kommerziell bei der Firma Albemarle erhältliches Bis(pentabromophenyl)ethane (CAS: 84852-53-9). Saytex® 8010 enthält nach Herstellerangaben 82,27 % Brom.

BC52, BC-52HP^{®} ist ein kommerziell bei der Firma Chemtura. erhältliches Tetrabrombisphenol-A. Carbonat Oligomer, Phenoxy terminiert. BC-52 HP enthält nach Herstellerangaben 53,9% Brom.

Die Compounds der Beispiele 1-12 werden hergestellt, indem eine 10 Gew.-%ige Pulvermischung aus Makrolon® 2408 Pulver mit 0,01 Gew.-% Irganox 1076; 0,04 Gew.-% Irgafos P-EPQ FF, 0,4 Gew.-% PETS und der in den Beispielen angegebenen Menge der genannten Flammschutzadditive aus der Gruppe der erfindungsgemäßen Sulfonsäuresalze (KSS, C4) sowie der bromhaltigen Flammschutzadditive (d.h. zu 0,01 Gew.-% Irganox 1076; 0,04 Gew.-% Irgafos P-EPQ FF, 0,4 Gew.-% PETS und die in den Beispielen angegebenen Menge der genannten Flammschutzadditive aus der Gruppe der erfindungsgemäßen Sulfonsäuresalze (KSS, C4) sowie der bromhaltigen Flammschutzadditive wurde Makrolon® 2408 Pulver zugegeben, so daß die Mischung 10 Gew.-% der Gesamtzusammensetzung ausmacht) zu 90 Gew.% Makrolon® 2408 Granulat, zudosiert wird, so dass die in den Beispielen genannten Mischungen (Compounds) resultieren, wobei die Angaben in Gew.-% sich zu 100% addieren und auf das Gewicht der Gesamtzusammensetzung bezogen sind.

Die Compounds der Beispiele 1 bis 12 werden anschließend für Flammschutzmessungen zu Probekörpern der Geometrie 127 * 12,7 * D mm3 (D [Dicke in mm] = 3,0; und 2,8) sowie der Geometrie 60 * 40 * 4 mm³ für optische Messungen mit einer Arburg Allrounder 270S-500-60 mit einem Schneckendurchmesser von 18 mm verarbeitet.

| Verfahrensparameter | Compounds aus Bespielen 1 bis 12 |
|---|---|
| Extruderheizzonen | |
| Extruder Z1 | 290 °C |
| Extruder Z2 | 295 °C |
| Extruder Z3 | 300 °C |
| Extruder Z4 | 300 °C |
| Werkzeugtemperatur | 95 °C |
| Einspritzdruck (max.) | 1600 bar |
| Nachdruck (Stützpunkt 1) | 1200 bar |
| Nachdruck (Stützpunkt 2) | 1000 bar |
| Nachdruck (Stützpunkt 3) | 800 bar |
| Staudruck | 100 bar |

Die Flammschutzprüfung wurde nach UL 94 V durchgeführt. Es wurden 2 Sets von je 5 UL Probekörpern (insgesamt wurden 10 UL Probekörper getestet) nach UL94V vermessen, wobei ein Set nach 48h Lagerung bei 50% rel. Luftfeuchtigkeit und 23°C, ein weiteres Set nach 7d Lagerung bei 70°C im Warmluftofen gemessen wurde.

### Beispiele:

| Beispiele: | | Vgl.1 | 2 | 3 | 4 | Vgl.5 | 6 | 7 | 8 | Dgl.9 | 10 | 11 | 12 |
|---|---|---|---|---|---|---|---|---|---|---|---|---|---|
| Kalium-diphenylsulfon-sulfonat (KSS) (Gew.-%) | | 0,40 | 0,40 | 0,40 | 0,40 | --- | --- | --- | --- | 0,40 | 0,40 | 0,40 | 0,40 |
| Kalium-nona-fluor-1-butansulfonat (C4) (Gew.-%) | | 0,065 | 0,065 | 0,065 | 0,065 | 0,065 | 0,065 | 0,065 | 0,065 | --- | --- | --- | --- |
| Br Quelle | | --- | FR 245 | Saytex 8010 | BC52 | --- | FR 245 | Saytex 8010 | BC52 | --- | FR 245 | Saytex 8010 | BC52 |
| Menge bromierten Flaffimschutzmittels (Gew.-%) | | --- | 0,13 | 0,10 | 0,16 | --- | 0.13 | 0,10 | 0,16 | --- | 0,13 | 0,10 | 0,16 |
| Bromgehalt(Gesamtzusammens etzung) (Gew.-%) | | --- | *0,088* | *0,082* | *0,086* | --- | *0,088* | *0,082* | *0,086* | --- | *0,088* | *0,082* | *0,086* |
| MVR | | 17,73 | 17,79 | 17,82 | 17,75 | | 17,80 | 17,94 | 17,28 | 17,30 | 18,06 | 17,51 | 17,45 |
| UL94V bei 3,0 mm | Anzahl VO** | 6 | 8 | 8 | 10 | 7 | 10 | 10 | 7 | 4 | 10 | 8 | 8 |
| | Anzahl V1 | 1 | 0 | 0 | 0 | 1 | 0 | 0 | 0 | 0 | 0 | 0 | 0 |
| | Anzahl V2 | 3 | 2 | 2 | 0 | 2 | 0 | 0 | 3 | 6 | 0 | 2 | 2 |
| | Anzahl Vn.B. | 0 | 0 | 0 | 0 | 0 | 0 | 0 | 0 | 0 | 0 | 0 | 0 |
| UL94V bei 2,8 mm | Anzahl V0 | 3 | 7 | 8 | 10 | 6 | 7 | 8 | 6 | 5 | 6 | 8 | 6 |
| | Anzahl V1 | 1 | 1 | 0 | 0 | 0 | 3 | 0 | 1 | 0 | 0 | 0 | 0 |
| | Anzahl V2 | 6 | 2 | 2 | 0 | 4 | 0 | 2 | 3 | 5 | 4 | 2 | 4 |
| | Anzahl Vn.B. | 0 | 0 | 0 | 0 | 0 | 0 | 0 | 0 | 0 | 0 | 0 | 0 |
| Trübung | % | 8,07 | 6,40 | 7,79 | 8,02 | 4,7 | 3,63 | 2,66 | 4,0 | 3,58 | 6,10 | 6,32 | 4,21 |
| Transmission | % | 82,84 | 83,29 | 83,14 | 83,03 | 84,1 | 84,37 | 84,65 | 84,2 | 83,91 | 83,86 | 83,74 | 84,14 |
| YI | | 3,16 | 2,56 | 2,72 | 2,77 | 2,2 | 2,03 | 1,78 | 2,1 | 2,03 | 2,31 | 2,47 | 1,70 |

| | | | | | | | | | | | | | |
|---|---|---|---|---|---|---|---|---|---|---|---|---|---|
| *theoretisch berechneter Bromgehalt nach Herstellerangaben **die Klassifizierungen V0 bis V2 bzw. n.B. entsprechen den Klassifizierungen nach UL94V | | | | | | | | | | | | | |

Wie sich aus der Tabelle klar ersehen lässt, weisen die Zusammensetzungen der vorliegenden Erfindung 2-4, 6-8, 10-12 zu den Vergleichsbeispielen V1, V5 und V9 einen deutlich verbesserten Flammschutz trotz einer verringerten Menge Flammschutzmittel, insbesondere bei geringer Dicke des Prüfkörpers, auf, ohne die Schmelzfließfähigkeit negativ zu beeinflussen. Darüber hinaus zeigt sich in den Beispielen 2-4 und 6-8 eine deutliche Verbesserung des YI.

## Patentansprüche

1. Flammhemmende Zusammensetzungenthaltend
A. 65,000 - 99,998 Gew.-% Polycarbonat,
B. 0,001 - 1,000 Gew.-% eines organischen Flammschutzsalzes ausgewählt aus der Gruppe, die aus Natrium- oder Kalium-nona-fluor-1-butansulfonat Natrium- oder Kalium-Diphenyl-Sulfonsäure-sulfonat und deren Mischungen besteht.
C. 0,001 - 1,000 Gew.% ein oder mehrere bromhaltige Flammschutzadditive,
**dadurch gekennzeichnet, dass** in der Gesamtzusammensetzung 100 ppm - 1000 ppm Brom enthalten sind, und
dass die Zusammensetzungen keinen UV-Stabilisator enthalten.

2. Zusammensetzung nach Anspruch 1, **dadurch gekennzeichnet, dass** das Polycarbonat ein mittleres Molekulargewicht M̅_{w} von 2 000 bis 200 000, bevorzugt 3 000 bis 150 000, insbesondere 5 000 bis 100 000, ganz besonders bevorzugt 10000 bis 30 000, insbesondere 10 000 bis 28 000, und ganz besonders bevorzugt mittlere Molekulargewichte M̅_{w} von 12.000 bis 26.000 g/mol, aufweist, wobei das Molekulargewicht nach GPC bestimmt wird.

3. Zusammensetzung nach einem der vorhergehenden Ansprüche, **dadurch gekennzeichnet, dass** als organisches Flammschutzsalz eine Mischung aus Natrium- oder Kalium-nona-fluor-1-butansulfonat und Natrium- oder Kalium-Diphenyl-Sulfonsäure-sulfonat eingesetzt wird.

4. Zusammensetzung nach einem der vorhergehenden Ansprüche, **dadurch gekennzeichnet, dass** Natrium- oder Kalium-Diphenyl-Sulfonsäure-sulfonat und Natrium- oder Kalium-nona-fluor-1-butansulfonat in einem Verhältnis von 3:1 bis 8:1, bevorzugt von 4:1 bis 7:1, und besonders bevorzugt von etwa 6: eingesetzt werden.

5. Zusammensetzung nach einem der vorhergehenden Ansprüche, **dadurch gekennzeichnet, dass** das bromhaltige Flammschutzadditiv ein bromiertes Oligocarbonat ist.

6. Zusammensetzung nach einem der vorhergehenden Ansprüche, **dadurch gekennzeichnet, dass** das bromhaltige Flammschutzadditiv bevorzugt Tetrabrom-bisphenol-A-oligocarbonat (TBBOC) ist.

7. Zusammensetzung nach einem der Ansprüche 1 - 4, **dadurch gekennzeichnet, dass** das bromhaltige Flammschutzadditiv 2,4,6-Tris-(2,4,6-Tribromophenoxy)-1,3,5-Triazin (CAS: 25713-60-4), 1,2-Bis(pentabromophenyl)ethane (CAS: 84852-53-9) und/oder Tribromphenol ist.

8. Zusammensetzung nach einem der vorhergehenden Ansprüche, **dadurch gekennzeichnet, dass** zusätzlich Polytetrafluorethylen oder ein Polytetrafluorethylen-Blend als Antidrippingmittel enthalten ist.

9. Zusammensetzung einem der vorhergehenden Ansprüche **dadurch gekennzeichnet, dass** die Summe der Gewichtsanteile von organischem Flammschutzsalz und bromhaltigem Flammschutzadditiv in der Gesamtzusammensetzung kleiner als 1 Gew.-% ist und das organische Flammschutzsalz vorzugsweise Kalium-nona-fluor-1-butansulfonat ist.

10. Zusammensetzung nach einem der vorhergehenden Ansprüche, **dadurch gekennzeichnet, dass** sie mindestens ein weiteres Polymer enthält ausgewählt aus der Gruppe, die aromatische Polycarbonate, aromatische Polyester, beispielsweise Polybutylenterephthalat und Polyethylenterephthalat, Polyamide, Polyimide, Polyesteramide, Polyacrylate und Polymethacrylate, beispielsweise Polyalkyl(meth)acrylate und insbesondere Polymethylmethacrylat, Polyacetale, Polyurethane, Polyolefine, halogenhaltige Polymere, Polysulfone, Polyethersulfone, Polyetherketone, Polysiloxane, Polybenzimidazole, Harnstoff-Formaldehyd-Harze, Melamin-Formaldehydharze, Phenol-Formaldehyd-Harze, Alkydharze, Epoxidharze,Polystyrole, Copolymere des Styrols oder des alpha-Methylstyrols mit Dienen oder Acrylderivaten, Pfropfpolymerisate auf Basis Acrylnitril/-Butadien/Styrol oder auf Acrylatkautschuk basierende Pfropfcopolymerisate sowie Siliconkautschuke umfasst.

11. Zusammensetzung nach einem der vorhergehenden Ansprüche, **dadurch gekennzeichnet, dass** sie übliche Additive enthält, ausgewählt aus der Gruppe, die Füllstoffe, UV-Stabilisatoren, Thermostabilisatoren, Antistatika, Pigmente, Entformungsmittel, Fließmittel sowie deren Kombinationen umfasst.

12. Erzeugnis enthaltend eine Zusammensetzung nach einem der Ansprüche 1 bis 11.

13. Verwendung der Zusammensetzungen nach einem der Ansprüche 1 bis 11 zur Herstellung von Formteilen im Elektro-/Elektronikbereich, Lampengehäuse, Elektroschutzschaltern, Stekkerleisten, Fernseher- oder Monitorgehäuse, von Platten für Architektur- oder Industrieverscheibungen oder als Verkleidungen von Schienenfahrzeug- und Flugzeuginnenräumen, wobei die Formteile vorzugsweise im Spritzgußverfahren hergestellt werden.

14. Verfahren zur Herstellung von flammwidrigen Zusammensetzungen nach einem der Ansprüche 1-11, umfassend die Schritte:
a) Herstellen eine Pulvermischung aus einem Polycarbonatpulver mit mindestens einem Flammschutzadditiv aus der Gruppe der perfluorierten Sulfonsäuresalze und mindestens einem bromhaltigen Flammschutzmittel sowie optional üblichen Additiven,
b) Dosierung der Pulvermischung a) zu einem weiteren Polycarbonat, vorzugsweise identisch mit dem Polycarbonat der Pulvermischung a), und
c) Extrusion des Gemisches des Schrittes b) bei einer Temperatur von 280 bis 330 °C.

## Claims

1. Flame-retardant composition containing
A. 65.000 to 99.998 wt.% polycarbonate,
B. 0.001 to 1.000 wt.% of an organic flame-retardant salt selected from the group consisting of sodium or potassium nonafluoro-1-butanesulfonate, sodium or potassium diphenyl sulfonic acid sulfonate and mixtures thereof,
C. 0.001 to 1.000 wt.% of one or more bromine-containing flame-retardant additives,
**characterised in that** that the overall composition contains 100 ppm to 1000 ppm bromine, and
**in that** the compositions contain no UV stabiliser.

2. Composition according to claim 1, **characterised in that** the polycarbonate has an average molecular weight M̅_{w} of 2000 to 200,000, preferably 3000 to 150,000, in particular 5000 to 100,000, most particularly preferably 10,000 to 30,000, in particular 10,000 to 28,000, and most particularly preferably average molecular weights M̅_{w} of 12,000 to 26,000 g/mol, wherein the molecular weight is determined by GPC.

3. Composition according to one of the preceding claims, **characterised in that** a mixture of sodium or potassium nonafluoro-1-butane sulfonate and sodium or potassium diphenyl sulfonic acid sulfonate is used as the organic flame-retardant salt.

4. Composition according to one of the preceding claims, **characterised in that** sodium or potassium diphenyl sulfonic acid sulfonate and sodium or potassium nonafluoro-1-butane sulfonate are used in a ratio of 3:1 to 8:1, preferably 4:1 to 7:1, and particularly preferably approximately 6: 1.

5. Composition according to one of the preceding claims, **characterised in that** the bromine-containing flame-retardant additive is a brominated oligocarbonate.

6. Composition according to one of the preceding claims, **characterised in that** the bromine-containing flame-retardant additive is preferably tetrabromobisphenol A oligocarbonate (TBBOC).

7. Composition according to one of claims 1 to 4, **characterised in that** the bromine-containing flame-retardant additive is 2,4,6-tris-(2,4,6-tribromophenoxy)-1,3,5-triazine (CAS: 25713-60-4), 1,2-bis(pentabromophenyl)ethane (CAS: 84852-53-9) and/or tribromophenol.

8. Composition according to one of the preceding claims, **characterised in that** it additionally contains polytetrafluoroethylene or a polytetrafluoroethylene blend as antidripping agent.

9. Composition according to one of the preceding claims, **characterised in that** the sum of the parts by weight of organic flame-retardant salt and bromine-containing flame-retardant additive in the overall composition is less than 1 wt.% and the organic flame-retardant salt is preferably potassium nonafluoro-1-butane sulfonate.

10. Composition according to one of the preceding claims, **characterised in that** it contains at least one further polymer selected from the group comprising aromatic polycarbonates, aromatic polyesters, for example polybutylene terephthalate and polyethylene terephthalate, polyamides, polyimides, polyester amides, polyacrylates and polymethacrylates, for example polyalkyl (meth)acrylates and in particular polymethyl methacrylate, polyacetals, polyurethanes, polyolefins, halogen-containing polymers, polysulfones, polyether sulfones, polyether ketones, polysiloxanes, polybenzimidazoles, urea-formaldehyde resins, melamine-formaldehyde resins, phenol-formaldehyde resins, alkyd resins, epoxy resins, polystyrenes, copolymers of styrene or alpha-methylstyrene with dienes or acrylic derivatives, graft polymers on the basis of graft copolymers based on acrylonitrile/butadiene/styrene or on acrylate rubber, and silicone rubbers.

11. Composition according to one of the preceding claims, **characterised in that** it contains conventional additives selected from the group comprising fillers, UV stabilisers, heat stabilisers, antistatic agents, pigments, release agents, flow control agents and combinations thereof.

12. Product containing a composition according to one of claims 1 to 11.

13. Use of the compositions according to one of claims 1 to 11 for the production of mouldings in the electrical/electronics sector, lamp housings, circuit breakers, plug connectors, television or monitor housings, of sheets for architectural or industrial glazing systems or as cladding for rail vehicle and aircraft interiors, the mouldings preferably being produced by injection moulding.

14. Process for producing flame-resistant compositions according to one of claims 1 to 11, comprising the following steps:
a) production of a powder mix consisting of a polycarbonate powder with at least one flame-retardant additive from the group of perfluorinated sulfonic acid salts and at least one bromine-containing flame retardant and optionally conventional additives,
b) addition of the powder mix a) to a further polycarbonate, preferably identical to the polycarbonate from the powder mix a), and
c) extrusion of the mixture from step b) at a temperature of 280 to 330°C.

## Revendications

1. Composition ignifugeante, contenant :
A. 65,000 à 99,998 % en poids de polycarbonate,
B. 0,001 à 1,000 % en poids d'un sel ignifugeant organique choisi dans le groupe constitué par le sulfonate de nona-fluoro-1-butane de sodium ou de potassium, le sulfonate de l'acide diphénylsulfonique de sodium ou de potassium et leurs mélanges,
C. 0,001 à 1,000 % en poids d'un ou de plusieurs additifs ignifugeants contenant du brome,
**caractérisée en ce que** la composition totale contient 100 ppm à 1 000 ppm de brome, et
**en ce que** les compositions ne contiennent pas de stabilisateur UV.

2. Composition selon la revendication 1, **caractérisée en ce que** le polycarbonate présente un poids moléculaire moyen M̅_{w} de 2 000 à 200 000, de préférence de 3 000 à 150 000, notamment de 5 000 à 100 000, de manière tout particulièrement préférée de 10 000 à 30 000, notamment de 10 000 à 28 000, et de manière tout particulièrement préférée des poids moléculaires moyens M̅_{w} de 12 000 à 26 000 g/mol, le poids moléculaire étant déterminé par CPG.

3. Composition selon l'une quelconque des revendications précédentes, **caractérisée en ce qu'**un mélange de sulfonate de nona-fluoro-1-butane de sodium ou de potassium et de sulfonate de l'acide diphénylsulfonique de sodium ou de potassium est utilisé en tant que sel ignifugeant organique.

4. Composition selon l'une quelconque des revendications précédentes, **caractérisée en ce que** du sulfonate de l'acide diphénylsulfonique de sodium ou de potassium et du sulfonate de nona-fluoro-1-butane de sodium ou de potassium sont utilisés en un rapport de 3:1 à 8:1, de préférence de 4:1 à 7:1, et de manière particulièrement préférée d'environ 6:1.

5. Composition selon l'une quelconque des revendications précédentes, **caractérisée en ce que** l'additif ignifugeant contenant du brome est un oligocarbonate bromé.

6. Composition selon l'une quelconque des revendications précédentes, **caractérisée en ce que** l'additif ignifugeant contenant du brome est de préférence un oligocarbonate de tétrabromo-bisphénol A (TBBOC).

7. Composition selon l'une quelconque des revendications 1 à 4, **caractérisée en ce que** l'additif ignifugeant contenant du brome est la 2,4,6-tris-(2,4,6-tribromophénoxy)-1,3,5-triazine (CAS : 25713-60-4), le 1,2-bis(pentabromophényl)éthane (CAS : 84852-53-9) et/ou le tribromophénol.

8. Composition selon l'une quelconque des revendications précédentes, **caractérisée en ce qu'**elle contient en outre du polytétrafluoroéthylène ou un mélange de polytétrafluoroéthylène en tant qu'agent anti-égouttement.

9. Composition selon l'une quelconque des revendications précédentes, **caractérisée en ce que** la somme des proportions en poids du sel ignifugeant organique et de l'additif ignifugeant contenant du brome dans la composition totale est inférieure à 1 % en poids, et le sel ignifugeant organique est de préférence le sulfonate de nonafluoro-1-butane de potassium.

10. Composition selon l'une quelconque des revendications précédentes, **caractérisée en ce qu'**elle contient au moins un autre polymère choisi dans le groupe comprenant les polycarbonates aromatiques, les polyesters aromatiques, par exemple le polybutylène téréphtalate et le polyéthylène téréphtalate, les polyamides, les polyimides, les polyesteramides, les polyacrylates et les polyméthacrylates, par exemple les poly(méth)acrylates d'alkyle et notamment le polyméthacrylate de méthyle, les polyacétals, les polyuréthanes, les polyoléfines, les polymères halogénés, les polysulfones, les polyéthersulfones, les polyéthercétones, les polysiloxanes, les polybenzimidazoles, les résines urée-formaldéhyde, les résines mélamine-formaldéhyde, les résines phénol-formaldéhyde, les résines alkydes, les résines époxydes, les polystyrènes, les copolymères de styrène ou d'alpha-méthylstyrène avec des diènes ou des dérivés acryliques, les polymères greffés à base d'acrylonitrile/butadiène/styrène ou les copolymères greffés à base de caoutchouc d'acrylate, ainsi que les caoutchoucs de silicone.

11. Composition selon l'une quelconque des revendications précédentes, **caractérisée en ce qu'**elle contient des additifs usuels, choisis dans le groupe comprenant les charges, les stabilisateurs UV, les thermostabilisateurs, les antistatiques, les pigments, les agents de démoulage, les agents d'écoulement et leurs combinaisons.

12. Article contenant une composition selon l'une quelconque des revendications 1 à 11.

13. Utilisation des compositions selon l'une quelconque des revendications 1 à 11 pour la fabrication de pièces moulées dans le domaine électrique/électronique, de boîtiers de lampes, de disjoncteurs électriques, de connecteurs, de boîtiers de télévisions ou d'écrans, de plaques pour vitrages architecturaux ou industriels, ou en tant qu'habillages d'espaces intérieurs de véhicules ferroviaires et d'avions, les pièces moulées étant de préférence fabriquées par le procédé de moulage par injection.

14. Procédé de fabrication de compositions ignifugées selon l'une quelconque des revendications 1 à 11, comprenant les étapes suivantes :
a) la fabrication d'un mélange de poudre constitué d'une poudre de polycarbonate avec au moins un additif ignifugeant du groupe des sels d'acide sulfonique perfluorés et au moins un agent ignifuge contenant du brome, ainsi qu'éventuellement des additifs usuels,
b) l'ajout du mélange de poudre a) à un autre polycarbonate, de préférence identique au polycarbonate du mélange de poudre a), et
c) l'extrusion du mélange de l'étape b) à une température de 280 à 330 °C.
